# EUROPEAN PATENT APPLICATION

(11) **EP 4 810 559 A1**
(43) Date of publication of application: **23.09.2026**
(21) Application number: 25164997.6
(22) Date of filing: 20.03.2025
(51) Int. Cl.: C08K 5/5399, C08K 7/06, C08K 7/14, C08L 69/00, C08L 83/10

(54) **GLASS-FILLED FLAME RETARDANT POLYCARBONATE COMPOSITIONS**

(71) Applicant: SHPP Global Technologies B.V., 4612 PX Bergen op Zoom (NL)
(72) Inventor: Ziegler, Christopher Ryan, Selkirk, 12158 (US); Grieshaber, Sarah, Selkirk, 12158 (US); Prehn, Frederick, Mt. Vernon, 47620 (US)
(74) Representative: Modiano, Gabriella Diana

(57) **Abstract**

Thermoplastic compositions include: (a) from about 10 wt% to about 85 wt% of a polycarbonate component; (b) from about 2 wt% to about 70 wt% of at least one polycarbonate-siloxane copolymer having a siloxane content of from about 5 wt% to about 45 wt%; (c) from about 2 wt% to about 15 wt% of a phosphazene flame retardant; and (d) from about 10 wt% to about 50 wt% of an inorganic filler comprising glass fiber, carbon fiber, or a combination thereof. The composition is free of per-and polyfluoroalkyl substances (PFAS-free), and has a total siloxane content of at least 1.0 wt%. 40 sample bars prepared according to UL94 having a thickness of from 0.6 millimeter (mm) to 1.0 mm exhibit 1 drip or less after two flame applications according to UL94.

## Description

### FIELD OF THE DISCLOSURE

The present disclosure relates to polycarbonate compositions, and in particular to glass-filled polycarbonate compositions including a polycarbonate-siloxane copolymer that have good flame retardant properties.

### BACKGROUND OF THE DISCLOSURE

As a result of ongoing deliberations regarding regulatory action on allowed utility of substances containing C-F bonds, there is both internal and external interest in developing resins without intentionally adding these kinds of substances. One very commonly used additive that meets this description is TSAN (styrene-acrylonitrile encapsulated PTFE). TSAN is used in most SABIC FR compositions to impart resistance to dripping. Hence, it is desired to have FR compositions that exhibit potential UL94 V0 capability without the utility of TSAN. In order to demonstrate UL94 V0 performance, flame out times need to be suitably low and resin dripping must be suppressed when flame applied according to UL94.

These and other shortcomings are addressed by aspects of the present disclosure.

### SUMMARY

Aspects of the disclosure relate to thermoplastic compositions including: (a) from about 10 wt% to about 85 wt% of a polycarbonate component; (b) from about 2 wt% to about 70 wt% of at least one polycarbonate-siloxane copolymer having a siloxane content of from about 5 wt% to about 45 wt%; (c) from about 2 wt% to about 15 wt% of a phosphazene flame retardant; and (d) from about 10 wt% to about 50 wt% of an inorganic filler comprising glass fiber, carbon fiber, or a combination thereof. The composition is free of per-and polyfluoroalkyl substances (PFAS-free), and has a total siloxane content of at least 1.0 wt%. 40 sample bars prepared according to UL94 having a thickness of from 0.6 millimeter (mm) to 1.0 mm exhibit 1 drip or less after two flame applications according to UL94.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIG. 1 is a graph showing flame retardant properties of comparative and example compositions according to aspects of the disclosure.
FIG. 2 is another graph showing flame retardant properties of comparative and example compositions according to aspects of the disclosure.
FIG. 3 is a further graph showing flame retardant properties of comparative and example compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mₙ" can be used interchangeably, and refer to the statistical average molecular weight of all the polymer chains in the sample and is defined by the formula: ${M}_{n} = \frac{\sum {N}_{i} {M}_{i}}{\sum {N}_{i}} ,$ where Mᵢ is the molecular weight of a chain and Nᵢ is the number of chains of that molecular weight. Mₙ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "M_{w}" can be used interchangeably, and are defined by the formula: ${M}_{w} = \frac{\sum {N}_{i} {{M}_{i}}^{2}}{\sum {N}_{i} {M}_{i}} ,$ where Mᵢ is the molecular weight of a chain and Nᵢ is the number of chains of that molecular weight. Compared to Mₙ, M_{w} takes into account the molecular weight of a given chain in determining contributions to the molecular weight average. Thus, the greater the molecular weight of a given chain, the more the chain contributes to the M_{w}. M_{w} can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula: $PDI = \frac{{M}_{w}}{{M}_{n}} .$ The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula: 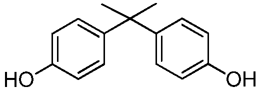 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: (a) from about 10 wt% to about 85 wt% of a polycarbonate component; (b) from about 2 wt% to about 70 wt% of at least one polycarbonate-siloxane copolymer having a siloxane content of from about 5 wt% to about 45 wt%; (c) from about 2 wt% to about 15 wt% of a phosphazene flame retardant; and (d) from about 10 wt% to about 50 wt% of an inorganic filler including glass fiber, carbon fiber, or a combination thereof. The composition is free of per-and polyfluoroalkyl substances (PFAS-free), and includes at least 1.0 wt% total siloxane. 40 sample bars prepared according to UL94 having a thickness of from 0.6 millimeter (mm) to 1.0 mm exhibit 1 drip or less after two flame applications according to UL94. The combined weight percent value of all components does not exceed 100 wt%, and all weight percent values are based on the total weight of the composition.

The polycarbonate component includes a polycarbonate homopolymer in some aspects. The polycarbonate homopolymer component may include bisphenol-A (BPA) homopolymer. Suitable polycarbonate homopolymers are available from SABIC. The polycarbonate homopolymer may include a high flow polycarbonate homopolymer, a low flow polycarbonate homopolymer, or a combination thereof. The high flow polycarbonate may have a melt flow index (MFI) greater than 10 g/10 minutes at 300 °C/1.2 kg (e.g., 20-30 g/10 min) when tested in accordance with ASTM D1238. The low flow polycarbonate may have an MFI less than 10 g/10 minutes at 300 °C/1.2 kg when tested in accordance with ASTM D1238. In certain aspects the polycarbonate component includes a post-consumer recycled polycarbonate (PCR PC). The polycarbonate component may include linear polycarbonate, branched polycarbonate, or a combination thereof.

The composition includes from about 10 wt% to about 85 wt% of the polycarbonate component. In some aspects the composition includes at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, or at most 25 wt%, or at most 20 wt%, or at most 15 wt%, or the polycarbonate component.

The composition includes from about 2 wt% to about 70 wt% of at least one polycarbonate-siloxane copolymer having a siloxane content of from about 5 wt% to about 45 wt%. In further aspects the polycarbonate-siloxane copolymer has a siloxane content of from about 4-8 wt% (e.g., transparent EXL available from SABIC having a siloxane content of about 6 wt%), from about 15-25 wt% or 18-22 wt% (e.g., opaque EXL available from SABIC having a siloxane content of about 20 wt%), and/or from about 35-45 wt% (such as a 40 wt% siloxane copolymer available from SABIC).

In particular aspects the composition includes at least two polycarbonate-siloxane copolymers, including a first polycarbonate-siloxane copolymer having a siloxane content of from about 35 wt% to about 45 wt% and a second polycarbonate-siloxane copolymer having a siloxane content of from about 5 wt% to about 25 wt%.

In certain aspects the composition includes at least 2 wt%, or at least 4 wt%, or at least 5 wt%, or at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, or at most 25 wt%, or at most 20 wt%, or at most 15 wt%, or at most 10 wt%, or at most 8 wt%, or at most 6 wt%, or at most 5 wt%, of the polycarbonate-siloxane copolymer.

The composition includes at least 1.0 wt% total siloxane. In further aspects thee composition has a total siloxane content of at least 1.1 wt%, or at least 1.2 wt%, or at least 1.3 wt%, or at least 1.4 wt%, or at least 1.5 wt%, or at least 1.6 wt%, or at least 1.7 wt%, or at least 1.8 wt%, or at least 1.9 wt%, or at least 2 wt%, or at least 2.5 wt%, or at least 3 wt%, or at least 3.5 wt%, or at least 4 wt%, or at most 6 wt%, or at most 5.5 wt%, or at most 5 wt%, or at most 4.5 wt%, or at most 4 wt%.

In certain aspects the composition includes from about 2 wt% to about 15 wt% of a phosphazene (PPZ) flame retardant. An example PPZ flame retardant is phenoxyphosphazene. In particular aspects the composition includes at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or the phosphazene flame retardant.

The composition includes from about 10 wt% to about 50 wt% of an inorganic filler including glass fiber, carbon fiber, or a combination thereof. In a specific aspect the composition includes glass fiber. The glass fiber may include a round glass fiber, a flat glass fiber, or a combination thereof. In certain aspects the composition includes a flat glass fiber.

In further aspects the composition includes at least 10 wt%, or at least 15 wt%, or at least 20 wt%, or at least 25 wt%, or at least 30 wt%, or at least 35 wt%, or at least 40 wt%, or at most 50 wt%, or at most 45 wt%, or at most 40 wt%, or at most 35 wt%, or at most 30 wt%, or at most 25 wt%, or at most 20 wt%, of the inorganic filler.

The composition may include at least one additional additive. The at least one additional additive may include, but is not limited to, an acid scavenger, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof. Compositions according to aspects of the disclosure may include from about 0.1 wt% to about 5 wt% of at least one additional additive, including at least 0.1 wt%, or at least 0.2 wt%, or at least 0.3 wt%, or at least 0.4 wt%, or at least 0.5 wt%, or at least 0.6 wt%, or at least 0.7 wt%, or at most 5 wt%, or at most 4.5 wt%, or at most 4 wt%, or at most 3.5 wt%, or at most 3 wt%, or at most 2.5 wt%, or at most 2 wt%, or at most 1.5 wt%, or at most 1 wt%, or at most 0.9 wt%, or at most 0.8 wt%, or at most 0.7 wt%, or the at least one additional additive.

The composition is free of per-and polyfluoroalkyl substances (PFAS-free). As used herein, PFAS-free means that the composition includes less than 1 wt%, or less than 0.9 wt%, or less than 0.8 wt%, or less than 0.7 wt%, or less than 0.6 wt%, or less than 0.5 wt%, or less than 0.4 wt%, or less than 0.3 wt%, or less than 0.2 wt%, or less than 0.1 wt%, or less than .09 wt%, or less than .07 wt%, or less than .05 wt%, or less than .03 wt%, or less than .01 wt%, or less than .009 wt%, or less than .007 wt%, or less than .005 wt%, or less than .003 wt%, or less than .001 wt%, or less than 0.0001 wt%, or 0 wt% per-and polyfluoroalkyl substances. In further aspects PFAS-free means that per-and polyfluoroalkyl substances are not intentionally added to the composition. This could mean, for example, that PFAS are not separately added to the composition prior to blending, but there are minor amounts of per-and polyfluoroalkyl substances remaining in the composition from impurities present in one or more of the other components included in the composition.

40 sample bars prepared according to UL94 having a thickness of from 0.6 millimeter (mm) to 1.0 mm exhibit 1 drip or less after two flame applications according to UL94. The flame testing is described further in the examples.

In further aspects the composition has a UL94 flammability rating of V0 or V1 at a thickness of 1.0 mm or less as evaluated on 40 test bars. The rating is established cumulatively on 40 test bars according to the following criteria:

| **UL Vx Rating** | **Flame Out Time (Individual)** | **Flaming Drips?** |
|---|---|---|
| V0 | < 10 s | None |
| V1 | < 30 s | None |
| V2 | < 30 s | Yes |

In particular aspects the composition has a UL94 flammability rating of V0 at a thickness of 0.6 mm or 1.0 mm and the composition includes at least 10 wt% of an inorganic filler and at least 8 wt% of a polycarbonate-siloxane copolymer (PC-Si 20 wt%). In further aspects the composition has a UL94 flammability rating of V0 at a thickness of 0.6 mm or 1.0 mm and the composition includes at least 10 wt% of an inorganic filler and 35 wt% of a polycarbonate-siloxane copolymer (PC-Si 6 wt%). In specific aspects the composition has a UL94 flammability rating of V0 at a thickness of 0.6 mm, 0.75 mm or 1.0 mm, and the composition includes at least 10 wt% of an inorganic filler and 1 wt% of a polycarbonate-siloxane copolymer (PC-Si 40 wt%).

In some aspects the composition has a Notched Izod (NII) strength of 150 J/m or higher as evaluated at 23 °C using a 2.75 joule (J) impact energy according to ASTM D256. In further aspects the composition has an NII strength of at least 150 J/m, or at least 155 J/m, or at least 160 J/m, or at least 165 J/m, or at least 170 J/m, or at least 175 J/m, or at least 180 J/m, or at least 185 J/m, or at least 190 J/m, or at least 195 J/m, or at least 200 J/m, or at least 205 J/m, or at least 210 J/m, or at least 215 J/m, or at least 220 J/m, or at least 225 J/m, or at least 230 J/m, or at most 300 J/m, or at most 275 J/m, or at most 250 J/m, or at most 225 J/m, as evaluated at 23 °C using a 2.75 joule (J) impact energy according to ASTM D256.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, compression molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion formed. In a still further aspect, the article is injection molded.

In specific aspects, the article is a component of a consumer electronics application.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1: A thermoplastic composition comprising:
a) from about 10 wt% to about 85 wt% of a polycarbonate component;
b) from about 2 wt% to about 70 wt% of at least one polycarbonate-siloxane copolymer having a siloxane content of from about 5 wt% to about 45 wt%;
c) from about 2 wt% to about 15 wt% of a phosphazene flame retardant; and
d) from about 10 wt% to about 50 wt% of an inorganic filler comprising glass fiber, carbon fiber, or a combination thereof,
   wherein the composition is free of per-and polyfluoroalkyl substances (PFAS-free),
   wherein the composition comprises at least 1.0 wt% total siloxane,
   wherein 40 sample bars prepared according to UL94 having a thickness of from 0.6 millimeter (mm) to 1.0 mm exhibit 1 drip or less after two flame applications according to UL94, and
   wherein the combined weight percent value of all components does not exceed 100 wt%, and all weight percent values are based on the total weight of the composition.

Aspect 2. The thermoplastic composition according to Aspect 1, wherein the polycarbonate component comprises a polycarbonate homopolymer.

Aspect 3. The thermoplastic composition according to Aspect 1 or 2, wherein the polycarbonate component comprises linear polycarbonate, branched polycarbonate, or a combination thereof.

Aspect 4. The thermoplastic composition according to any one of Aspects 1 to 3, wherein the polycarbonate component comprises a low flow polycarbonate homopolymer, a high flow polycarbonate homopolymer, or a combination thereof.

Aspect 5. The thermoplastic composition according to any one of Aspects 1 to 4, wherein the polycarbonate-siloxane copolymer has a siloxane content of from about 35 wt% to about 45 wt%.

Aspect 6. The thermoplastic composition according to any one of Aspects 1 to 5, wherein the polycarbonate-siloxane copolymer has a siloxane content of from about 15 wt% to about 25 wt%.

Aspect 7. The thermoplastic composition according to any one of Aspects 1 to 6, wherein the composition comprises at least two polycarbonate-siloxane copolymers, including a first polycarbonate-siloxane copolymer having a siloxane content of from about 35 wt% to about 45 wt% and a second polycarbonate-siloxane copolymer having a siloxane content of from about 5 wt% to about 25 wt%.

Aspect 8. The thermoplastic composition according to any one of Aspects 1 to 7, wherein the inorganic filler comprises flat glass fiber.

Aspect 9. The thermoplastic composition according to any one of Aspects 1 to 8, wherein the composition comprises from about 15 wt% to about 30 wt% of the inorganic filler.

Aspect 10. The thermoplastic composition according to any one of Aspects 1 to 9, wherein the composition has a total siloxane content of from about 2 wt% to about 4 wt%.

Aspect 11. The thermoplastic composition according to any one of Aspects 1 to 10, wherein the composition comprises at least one additional additive.

Aspect 12. The thermoplastic composition according to Aspect 11, wherein the at least one additional additive comprises an acid scavenger, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 13. The thermoplastic composition according to any one of Aspects 1 to 12, wherein the composition has a UL94 flammability rating of V0 or V1 at a thickness of 1.0 mm or less as evaluated on 40 test bars.

Aspect 14. The thermoplastic composition according to any one of Aspects 1 to 13, wherein the composition has a UL94 flammability rating of V0 or V1 at a thickness of 0.6 mm as evaluated on 40 test bars.

Aspect 15. The thermoplastic composition according to any one of Aspects 1 to 14, wherein the composition has a Notched Izod (NII) strength of 150 J/m or higher as evaluated at 23 °C using a 2.75 joule (J) impact energy according to ASTM D256.

Aspect 16. An article comprising the thermoplastic composition according to any one of Aspects 1 to 15.

Aspect 17. The article according to Aspect 16, wherein the article is a component of a consumer electronics application.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Example and comparative compositions described herein included one or more of the components recited in Table 1:

**Table 1 - Components**

| **Component** | **Description** | **Source** |
|---|---|---|
| PCR PC | Post-consumer recycled polycarbonate, clear, PC-116A, CAS # 25971-63-5 | HONGYU |
| PC | Lexan^{™} high flow polycarbonate homopolymer, Mw -21,900, MFI 20-30 g/10 min at 1.2 kg and 300 °C, CAS # 111211-39-3 | SABIC |
| PC-Si-1 | Polycarbonate-siloxane copolymer, 6 wt% siloxane, t-EXL | SABIC |
| PC-Si-2 | Polycarbonate-siloxane copolymer, 20 wt% siloxane, o-EXL | SABIC |
| PC-Si-3 | Polycarbonate-siloxane copolymer, 40 wt% siloxane | SABIC |
| PPZ | Phenoxyphosphazene, flame retardant, FP-110 | Fushimi |
| TBPP | Tris(2,4-di-tert-butylphenyl) phosphite, stabilizer, CAS # 31570-04-4 | BASF |
| Irg1010 | Irganox^{®} 1010, phenolic antioxidant stabilizer | BASF |
| PELTP | Pentaerythritol tetrakis(3-laurylthiopropionate), antioxidant | Haruno Sangyo Kaisha |
| PETS | Pentaerythritol tetrastearate, mold release, CAS # 115-83-3 | Arxada |
| GF | Flat glass fiber, CSG 3PA-830, CAS # 65997-17-3 | NITTOBO |

UL94 Vx testing was performed on samples of compositions as indicated in the following tables. Sample bars comprising the example and comparative compositions were tested at thicknesses of 0.6 mm, 1 mm, and 0.75 mm (for the PC-Si (40 wt%) samples only). 40 sample bars for each composition were prepared-20 bars were tested at room temperature and 20 were tested after aging at 70 °C for 168 hours according to UL94. The total number of drips ("Drips (total #)" in the tables) is an aggregate of dripping observations (both flaming and non-flaming) from two flame applications according to the UL94 test standard. Thus, each bar has flame applied to it twice (FOT1 and FOT2), so the maximum number of drips can be 80 for any given composition. "FOT > 10s (total #)" is the total number of bars that had a flame-out time of greater than 10 seconds. Average FOT and SD FOT is the average flame-out time and standard deviation for flame-out time from both flame applications (FOT1 and FOT2). Max FOT is the maximum flame-out time observed for any of the sample bars, and includes both flame applications (FOT1 and FOT2).

The UL94 flammability rating was established cumulatively on 40 test bars according to the following criteria:

| **UL Vx Rating** | **Flame Out Time (Individual)** | **Flaming Drips?** |
|---|---|---|
| V0 | < 10 s | None |
| V1 | < 30 s | None |
| V2 | < 30 s | Yes |

Various mechanical properties of the compositions were also evaluated; results are provided in the tables. Ash percentage was evaluated according to ASTM D5630. Density and specific gravity were evaluated in accordance with ASTM D792. Melt volume flow rate (MVR) was evaluated at 300 °C using a 1.2 kilogram (kg) force in accordance with ASTM D1238. Calculated viscosity ("Calc viscosity") was evaluated in accordance with ASTM D3835 at 300 °C at the indicated shear rate. Heat distortion temperature (HDT) was evaluated on a 3.2 mm sample using a 0.45 megapascal (MPa) load in accordance with ASTM D648. Notched Izod impact (NII) properties (ductility and strength) were evaluated at the indicated temperature using a 2.75 joule (J) impact energy according to ASTM D256. Tensile properties (modulus of elasticity, stress at yield, stress at break, elongation at yield, and elongation at break) were evaluated according to ASTM D638.

### Example 1 - Compositions Including PC-Si (20 wt% Siloxane)

Compositions including varying amounts of polycarbonate-siloxane copolymer having a 20 wt% siloxane content (PC-Si (20 wt%)) and glass fiber content were prepared as shown in Table 2A. FR properties of the compositions are shown in Table 2B. Various mechanical properties are shown in Table 2C:

**Table 2A - Example and Comparative Compositions**

| **Component** | | **C1.1** | **C1.2** | **C1.3** | **C1.4** | **Ex1.1** | **Ex1.2** | **C1.5** | **Ex1.3** | **Ex1.4** | **Ex1.5** |
|---|---|---|---|---|---|---|---|---|---|---|---|
| PC-Si-2 | | 0 | 10 | 20 | 0 | 10 | 20 | 0 | 10 | 20 | 10 |
| PCR PC | | 50 | 50 | 50 | 50 | 50 | 50 | 50 | 50 | 42.5 | 50 |
| PC | | 42.5 | 32.5 | 22.5 | 27.5 | 17.5 | 7.5 | 12.5 | 2.5 | | 17.5 |
| PPZ | | 7 | 7 | 7 | 7 | 7 | 7 | 7 | 7 | 7 | 7 |
| TBPP | | 0.1 | 0.1 | 0.1 | 0.1 | 0.1 | 0.1 | 0.1 | 0.1 | 0.1 | 0.1 |
| Irg1010 | | 0.1 | 0.1 | 0.1 | 0.1 | 0.1 | 0.1 | 0.1 | 0.1 | 0.1 | 0.1 |
| PELTP | | 0.1 | 0.1 | 0.1 | 0.1 | 0.1 | 0.1 | 0.1 | 0.1 | 0.1 | 0.1 |
| PETS | | 0.2 | 0.2 | 0.2 | 0.2 | 0.2 | 0.2 | 0.2 | 0.2 | 0.2 | 0.2 |
| GF | | 0 | 0 | 0 | 15 | 15 | 15 | 30 | 30 | 30 | 15 |
| | | | | | | | | | | | |
| Total (wt%) | | 100 | 100 | 100 | 100 | 100 | 100 | 100 | 100 | 100 | 100 |
| | Siloxane | 0 | 2 | 4 | 0 | 2 | 4 | 0 | 2 | 4 | 2 |
| | Resin blend | 100 | 100 | 100 | 85 | 85 | 85 | 70 | 70 | 70 | 85 |
| | Glass fiber | 0 | 0 | 0 | 15 | 15 | 15 | 30 | 30 | 30 | 15 |

**Table 2B - UL94 Vx Properties of Table 2A Compositions**

| | **C1.1** | **C1.2** | **C1.3** | **C1.4** | **Ex1.1** | **Ex1.2** | **C1.5** | **Ex1.3** | **Ex1.4** | **Ex1.5** |
|---|---|---|---|---|---|---|---|---|---|---|
| | | | | | | | | | | |

| **0.6 mm (N=40)** | | | | | | | | | | |
|---|---|---|---|---|---|---|---|---|---|---|
| Drips (total #) | 50 | 9 | 13 | 8 | 0 | 0 | 0 | 0 | 0 | 0 |
| Flaming (total #) | 23 | 0 | 0 | 4 | 0 | 0 | 0 | 0 | 0 | 0 |
| FOT > 10s (total #) | 3 | 2 | 1 | 2 | 0 | 0 | 0 | 0 | 0 | 0 |
| Average FOT (s) | 4.3 | 3.8 | 1.9 | 3.7 | 1.7 | 1.7 | 3.5 | 2.0 | 2.0 | 1.6 |
| SD FOT | 2.9 | 2.9 | 2.1 | 2.5 | 1.3 | 1.6 | 1.9 | 1.5 | 1.3 | 1.6 |
| Max FOT (s) | 15 | 18 | 13 | 11 | 4 | 8 | 8 | 6 | 5 | 7 |
| 40 Bar UL94 Rating | V2 | V2 | V1 | V2 | V0 | V0 | V0 | V0 | V0 | V0 |
| | | | | | | | | | | |

| **1.0 mm (N=40)** | | | | | | | | | | |
|---|---|---|---|---|---|---|---|---|---|---|
| Drips (total #) | 60 | 26 | 0 | 1 | 0 | 0 | 0 | 0 | 0 | 0 |
| Flaming (total #) | 37 | 3 | 0 | 1 | 0 | 0 | 0 | 0 | 0 | 0 |
| FOT > 10s (total #) | 9 | 5 | 0 | 0 | 0 | 0 | 2 | 0 | 0 | 0 |
| Average FOT (s) | 6.2 | 3.9 | 1.7 | 3.3 | 1.8 | 1.4 | 3.8 | 1.5 | 1.9 | 1.7 |
| SD FOT | 3.3 | 4.0 | 1.5 | 1.8 | 1.5 | 1.1 | 2.6 | 1.0 | 1.2 | 1.5 |
| Max FOT (s) | 16 | 24 | 7 | 8 | 6 | 5 | 15 | 5 | 4 | 9 |
| 40 Bar UL94 Rating | V2 | V2 | V0 | V2 | V0 | V0 | V0 | V0 | V0 | V0 |

**Table 2C - Mechanical Properties of Table 2A Compositions**

| **Properties** | | **C1.1** | **C1.2** | **C1.3** | **C1.4** | **Ex1.1** | **Ex1.2** | **C1.5** | **Ex1.3** | **Ex1.4** | **Ex1.5** |
|---|---|---|---|---|---|---|---|---|---|---|---|
| | | | | | | | | | | | |

| **Physical** | | | | | | | | | | | |
|---|---|---|---|---|---|---|---|---|---|---|---|
| Ash | % | 0.7 | 1.4 | 2.0 | 15.5 | 16.3 | 16.7 | 30.2 | 30.7 | 31.6 | 16.1 |
| Density | g/cc | 1.20 | 1.20 | 1.19 | 1.31 | 1.30 | 1.30 | 1.43 | 1.42 | 1.42 | 1.30 |
| Specific Gravity | - | 1.21 | 1.20 | 1.20 | 1.31 | 1.30 | 1.30 | 1.43 | 1.43 | 1.42 | 1.30 |
| | | | | | | | | | | | |

| **Rheology** | | | | | | | | | | | |
|---|---|---|---|---|---|---|---|---|---|---|---|
| MVR (300 °C, 1.2 kg) | cm³/10 min | 32.1 | 24.3 | 18.8 | 15.4 | 12.4 | 8.74 | 11.6 | 9.73 | 7.41 | 11.9 |
| Calc viscosity, 100 1/s, 300 °C | Pa·s | 181 | 218 | 260 | 306 | 348 | 424 | 358 | 425 | 491 | 361 |
| Calc viscosity, 1500 1/s, 300 °C | Pa·s | 129 | 139 | 144 | 154 | 160 | 177 | 166 | 173 | 179 | 162 |
| Calc viscosity, 3000 1/s, 300 C | Pa·s | 104 | 108 | 108 | 116 | 117 | 128 | 121 | 124 | 128 | 118 |
| Calc viscosity, 5000 1/s, 300 C | Pa·s | 85 | 86 | 86 | 90 | 91 | 99 | 95 | 95 | 99 | 95 |
| | | | | | | | | | | | |

| **Heat** | | | | | | | | | | | |
|---|---|---|---|---|---|---|---|---|---|---|---|
| HDT (0.45 MPa, 3.2 mm) | °C | 121 | 118 | 117 | 123 | 122 | 123 | 122 | 120 | 119 | 123 |
| | | | | | | | | | | | |

| **Ductility** | | | | | | | | | | | |
|---|---|---|---|---|---|---|---|---|---|---|---|
| NII Ductility (23 °C, 2.75 J) | % | 0 | 100 | 100 | 0 | 100 | 100 | 0 | 0 | 60 | 100 |
| NII Strength (23 °C, 2.75 J) | J/m | 79 | 729 | 827 | 69.8 | 172 | 194 | 145 | 190 | 193 | 173 |
| NII Ductility (-20 °C, 2.75 J) | % | 0 | 0 | 100 | 0 | 0 | 100 | 0 | 0 | 80 | 0 |
| NII Strength (-20 °C, 2.75 J) | J/m | 69.8 | 115 | 643 | 63.9 | 99.2 | 165 | 126 | 147 | 172 | 92.3 |
| | | | | | | | | | | | |

| **Tensile** | | | | | | | | | | | |
|---|---|---|---|---|---|---|---|---|---|---|---|
| Modulus of Elasticity | MPa | 2516 | 2494 | 2282 | 5664 | 5586 | 5658 | 9650 | 9424 | 9460 | 5506 |
| Stress at Yield | MPa | 63.2 | 59.9 | 56.8 | 98.9 | 96.5 | 94 | | 130 | 123 | 95 |
| Stress at Break | MPa | 50.1 | 54.4 | 47.5 | 96.3 | 94.5 | 91.4 | 134 | 128 | 121 | 92.8 |
| Elongation at Yield | % | 6.3 | 6 | 5.8 | 3.3 | 3.2 | 3.1 | | 2.5 | 2.5 | 3.2 |
| Elongation at Break | % | 78 | 110 | 82 | 3.6 | 3.4 | 3.5 | 2.6 | 2.6 | 2.6 | 3.5 |

From the data it is observed that each of example compositions Ex1.1-Ex1.5 included at least 10 wt% of a PC-Si copolymer (20 wt% siloxane) for a total siloxane content of at least 2 wt%. These compositions also included at least 15 wt% glass fiber. The 0.6 mm sample bars of compositions Ex1.1-Ex1.5 had zero (0) total drips (40 bars x 2 flame applications each = 80 total flame applications) and an average flame-out time of 2.0 seconds or lower. The 1.0 mm sample bars of compositions Ex1.1-Ex1.5 had zero (0) total drips and an average flame-out time of 1.9 seconds or lower. The comparative compositions could not satisfy this FR performance; composition C1.3 satisfied this FR performance at the 1.0 mm sample thickness but not the 0.6 mm thickness.

Additionally, each of example compositions Ex1.1-Ex1.5 had a UL94 flammability rating of V0 at a thickness of 0.6 mm and 1.0 mm as evaluated on 40 test bars.

### Example 2 - Compositions Including PC-Si (6 wt% Siloxane)

Compositions including varying amounts of polycarbonate-siloxane copolymer having a 6 wt% siloxane content (PC-Si (6 wt%)) and glass fiber content were prepared as shown in Table 3A. FR properties of the compositions are shown in Table 3B. Various mechanical properties are shown in Table 3C:

**Table 3A - Example and Comparative Compositions**

| **Component** | | **C2.1** | **C2.2** | **C2.3** | **C2.4** | **Ex2.1** | **Ex2.2** | **C2.5** | **Ex2.3** | **Ex2.4** |
|---|---|---|---|---|---|---|---|---|---|---|
| PC-Si-1 | | | 33.33 | 66.66 | | 33.33 | 66.66 | | 33.33 | 62.5 |
| PCR PC | | 50 | 50 | 25.84 | 50 | 44.17 | 10.84 | 50 | 29.17 | |
| PC | | 42.5 | 9.17 | | 27.5 | | | 12.5 | | |
| PPZ | | 7 | 7 | 7 | 7 | 7 | 7 | 7 | 7 | 7 |
| TBPP | | 0.1 | 0.1 | 0.1 | 0.1 | 0.1 | 0.1 | 0.1 | 0.1 | 0.1 |
| Irg1010 | | 0.1 | 0.1 | 0.1 | 0.1 | 0.1 | 0.1 | 0.1 | 0.1 | 0.1 |
| PELTP | | 0.1 | 0.1 | 0.1 | 0.1 | 0.1 | 0.1 | 0.1 | 0.1 | 0.1 |
| PETS | | 0.2 | 0.2 | 0.2 | 0.2 | 0.2 | 0.2 | 0.2 | 0.2 | 0.2 |
| GF | | 0 | 0 | 0 | 15 | 15 | 15 | 30 | 30 | 30 |
| | | | | | | | | | | |
| Total (wt%) | | 100 | 100 | 100 | 100 | 100 | 100 | 100 | 100 | 100 |
| | Siloxane | 0 | 2 | 4 | 0 | 2 | 4 | 0 | 2 | 4 |
| | Resin blend | 100 | 100 | 100 | 85 | 85 | 85 | 70 | 70 | 70 |
| | Glass fiber | 0 | 0 | 0 | 15 | 15 | 15 | 30 | 30 | 30 |

**Table 3B - UL94 Vx Properties of Table 3A Compositions**

| | **C2.1** | **C2.2** | **C2.3** | **C2.4** | **Ex2.1** | **Ex2.2** | **C2.5** | **Ex2.3** | **Ex2.4** |
|---|---|---|---|---|---|---|---|---|---|
| | | | | | | | | | |

| **0.6 mm (N=40)** | | | | | | | | | |
|---|---|---|---|---|---|---|---|---|---|
| Drips (total #) | 40 | 36 | 38 | 11 | 0 | 0 | 0 | 0 | 0 |
| Flaming (total #) | 32 | 8 | 2 | 3 | 0 | 0 | 0 | 0 | 0 |
| FOT > 10s (total #) | 3 | 4 | 2 | 1 | 1 | 0 | 2 | 1 | 2 |
| Average FOT (s) | 5.3 | 4.8 | 3.5 | 3.9 | 2.1 | 2.1 | 4.5 | 3.0 | 4.1 |
| SD FOT | 3.7 | 3.1 | 2.5 | 2.5 | 2.0 | 1.3 | 3.0 | 2.0 | 2.7 |
| Max FOT (s) | 25 | 14 | 13 | 13 | 11 | 7 | 14 | 12 | 12 |
| 40 Bar UL94 Rating | V2 | V2 | V2 | V2 | V1 | V0 | V1 | V1 | V1 |
| | | | | | | | | | |

| **1.0 mm (N=40)** | | | | | | | | | |
|---|---|---|---|---|---|---|---|---|---|
| Drips (total #) | 65 | 37 | 25 | 9 | 1 | 0 | 0 | 0 | 0 |
| Flaming (total #) | 52 | 2 | 1 | 2 | 1 | 0 | 0 | 0 | 0 |
| FOT > 10s (total #) | 12 | 4 | 2 | 0 | 1 | 0 | 1 | 0 | 0 |
| Average FOT (s) | 6.9 | 4.3 | 2.5 | 4.9 | 2.2 | 2.2 | 5.0 | 2.7 | 2.4 |
| SD FOT | 4.6 | 3.3 | 1.8 | 2.4 | 2.0 | 1.2 | 2.8 | 1.7 | 1.9 |
| Max FOT (s) | 20 | 19 | 9 | 15 | 12 | 6 | 11 | 9 | 9 |
| 40 Bar UL94 Rating | V2 | V2 | V2 | V2 | V2 | V0 | V1 | V0 | V0 |

**Table 3C - Mechanical Properties of Table 3A Compositions**

| **Properties** | | **C2.1** | **C2.2** | **C2.3** | **C2.4** | **Ex2.1** | **Ex2.2** | **C2.5** | **Ex2.3** | **Ex2.4** |
|---|---|---|---|---|---|---|---|---|---|---|
| | | | | | | | | | | |

| **Physical** | | | | | | | | | | |
|---|---|---|---|---|---|---|---|---|---|---|
| Ash | % | 0.6 | 1.4 | 7.9 | 15.4 | 16.3 | 16.8 | 30.4 | 31.3 | 31.5 |
| Density | g/cc | 1.20 | 1.20 | 1.20 | 1.31 | 1.30 | 1.30 | 1.43 | 1.43 | 1.42 |
| Specific Gravity | - | 1.21 | 1.20 | 1.20 | 1.31 | 1.31 | 1.30 | 1.44 | 1.43 | 1.42 |
| | | | | | | | | | | |

| **Rheology** | | | | | | | | | | |
|---|---|---|---|---|---|---|---|---|---|---|
| MVR (300 °C, 1.2 kg) | cm³/10 min | 16.6 | 19.9 | 20.0 | 14.1 | 11.0 | 9.5 | 10.1 | 8.5 | 7.3 |
| Calc viscosity, 100 1/s, 300 °C | Pa·s | 354 | 284 | 270 | 320 | 387 | 400 | 420 | 455 | 473 |
| Calc viscosity, 1500 1/s, 300 °C | Pa·s | 207 | 157 | 141 | 160 | 168 | 158 | 174 | 178 | 174 |
| Calc viscosity, 3000 1/s, 300 C | Pa·s | 155 | 119 | 107 | 120 | 123 | 118 | 126 | 126 | 121 |
| Calc viscosity, 5000 1/s, 300 C | Pa·s | 116 | 95 | 86 | 95 | 96 | 91 | 100 | 102 | 92 |
| | | | | | | | | | | |

| **Heat** | | | | | | | | | | |
|---|---|---|---|---|---|---|---|---|---|---|
| HDT (0.45 MPa, 3.2 mm) | °C | 121 | 119 | 114 | 125 | 123 | 120 | 123 | 119 | 118 |
| | | | | | | | | | | |

| **Ductility** | | | | | | | | | | |
|---|---|---|---|---|---|---|---|---|---|---|
| NII Ductility (23 °C, 2.75 J) | % | 0 | 100 | 100 | 0 | 80 | 60 | 0 | 0 | 80 |
| NII Strength (23 °C, 2.75 J) | J/m | 88.6 | 692 | 620 | 57.4 | 173 | 170 | 149 | 178 | 198 |
| NII Ductility (-20 °C, 2.75 J) | % | 0 | 0 | 0 | 0 | 0 | 0 | 0 | 0 | 0 |
| NII Strength (-20 °C, 2.75 J) | J/m | 81 | 115 | 114 | 66.2 | 94.9 | 129 | 140 | 158 | 178 |
| | | | | | | | | | | |

| **Tensile** | | | | | | | | | | |
|---|---|---|---|---|---|---|---|---|---|---|
| Modulus of Elasticity | MPa | 2480 | 2514 | 2490 | 5852 | 5758 | 5502 | 9396 | 9738 | 9630 |
| Stress at Yield | MPa | 63.8 | 62 | 60.1 | 101 | 100 | 95.4 | | 134 | |
| Stress at Break | MPa | 54.5 | 55.5 | 48.4 | 99.5 | 98.2 | 93.6 | 136 | 134 | 133 |
| Elongation at Yield | % | 6.4 | 6 | 5.8 | 3.3 | 3.2 | 3.1 | | 2.5 | |
| Elongation at Break | % | 89 | 110 | 110 | 3.6 | 3.5 | 3.3 | 2.6 | 2.6 | 2.5 |

From the data it is observed that each of example compositions Ex2.1-Ex2.4 included at least 33 wt% of a PC-Si copolymer (6 wt% siloxane) for a total siloxane content of at least 2 wt%. These compositions also included at least 15 wt% glass fiber. The sample bars of compositions Ex2.1-Ex2.4 had one (1) or fewer total drips (40 bars x 2 flame applications each = 80 total flame applications) at both 0.6 mm and 1.0 mm. Ex2.1-Ex2.3 also had an average flame-out time of 3.0 seconds or lower at both 0.6 and 1.0 mm. The comparative compositions could not satisfy this FR performance; they all had > 1 total drips and/or an average FOT of greater than 3.0.

Each of the example compositions in Example 3 had a UL94 flammability rating of V0 or V1 at a thickness of 0.6 mm and 1.0 mm as evaluated on 40 test bars except for example composition Ex2.1, which had one flaming drip at a thickness of 1.0 mm, resulting in a V2 test rating.

### Example 3 - Compositions Including PC-Si (40 wt% Siloxane)

Compositions including varying amounts of polycarbonate-siloxane copolymer having a 40 wt% siloxane content (PC-Si (40 wt%)) and glass fiber content were prepared as shown in Table 4A. FR properties of the compositions are shown in Table 4B. Various mechanical properties are shown in Table 4C:

**Table 4A - Example and Comparative Compositions**

| **Component** | | **C3.1** | **C3.2** | **C3.3** | **C3.4** | **Ex3.1** | **Ex3.2** | **C3.5** | **Ex3.3** | **Ex3.4** |
|---|---|---|---|---|---|---|---|---|---|---|
| PC-Si-3 | | | 5 | 10 | | 5 | 10 | | 5 | 10 |
| PCR PC | | 50 | 50 | 50 | 50 | 50 | 50 | 50 | 50 | 50 |
| PC | | 42.5 | 37.5 | 32.5 | 27.5 | 22.5 | 17.5 | 12.5 | 7.5 | 2.5 |
| PPZ | | 7 | 7 | 7 | 7 | 7 | 7 | 7 | 7 | 7 |
| TBPP | | 0.1 | 0.1 | 0.1 | 0.1 | 0.1 | 0.1 | 0.1 | 0.1 | 0.1 |
| Irg1010 | | 0.1 | 0.1 | 0.1 | 0.1 | 0.1 | 0.1 | 0.1 | 0.1 | 0.1 |
| PELTP | | 0.1 | 0.1 | 0.1 | 0.1 | 0.1 | 0.1 | 0.1 | 0.1 | 0.1 |
| PETS | | 0.2 | 0.2 | 0.2 | 0.2 | 0.2 | 0.2 | 0.2 | 0.2 | 0.2 |
| GF | | 0 | 0 | 0 | 15 | 15 | 15 | 30 | 30 | 30 |
| | | | | | | | | | | |
| Total (wt%) | | 100 | 100 | 100 | 100 | 100 | 100 | 100 | 100 | 100 |
| | Siloxane | 0 | 2 | 4 | 0 | 2 | 4 | 0 | 2 | 4 |
| | Resin blend | 100 | 100 | 100 | 85 | 85 | 85 | 70 | 70 | 70 |
| | Glass fiber | 0 | 0 | 0 | 15 | 15 | 15 | 30 | 30 | 30 |

**Table 4B - UL94 Vx Properties of Table 4A Compositions**

| | | **C3.1** | **C3.2** | **C3.3** | **C3.4** | **Ex3.1** | **Ex3.2** | **C3.5** | **Ex3.3** | **Ex3.4** |
|---|---|---|---|---|---|---|---|---|---|---|
| | | | | | | | | | | |

| **0.6 mm (N=40)** | | | | | | | | | | |
|---|---|---|---|---|---|---|---|---|---|---|
| Drips (total #) | | 59 | 33 | 26 | 0 | 0 | 0 | 0 | 0 | 0 |
| | Flaming (total #) | 50 | 2 | 6 | 0 | 0 | 0 | 0 | 0 | 0 |
| FOT > 10s (total #) | | 10 | 1 | 1 | 6 | 0 | 0 | 1 | 0 | 0 |
| Average FOT (s) | | 5.3 | 3.4 | 2.9 | 4.7 | 1.7 | 2.5 | 3.9 | 2.0 | 2.2 |
| SD FOT | | 4.0 | 2.4 | 2.1 | 3.4 | 1.5 | 1.7 | 2.0 | 1.5 | 1.5 |
| Max FOT (s) | | 17 | 15 | 11 | 14 | 7 | 8 | 11 | 6 | 7 |
| 40 Bar UL94 Rating | | V2 | V2 | V2 | V1 | V0 | V0 | V1 | V0 | V0 |
| | | | | | | | | | | |

| **0.75 mm (N=40)** | | | | | | | | | | |
|---|---|---|---|---|---|---|---|---|---|---|
| Drips (total #) | | 60 | 15 | 0 | 3 | 0 | 0 | 0 | 0 | 0 |
| | Flaming (total #) | 54 | 7 | 0 | 1 | | | | | |
| FOT > 10s (total #) | | 10 | 1 | 0 | 2 | 0 | 0 | 3 | 0 | 0 |
| Average FOT (s) | | 5.4 | 3.8 | 2.5 | 4.0 | 1.4 | 2.1 | 3.3 | 2.1 | 2.2 |
| SD FOT | | 4.7 | 2.6 | 1.6 | 2.7 | 1.3 | 1.4 | 2.5 | 1.4 | 1.7 |
| Max FOT (s) | | 18 | 13 | 7 | 11 | 5 | 10 | 13 | 7 | 9 |
| 40 Bar UL94 Rating | | V2 | V2 | V0 | V2 | V0 | V0 | V1 | V0 | V0 |
| | | | | | | | | | | |

| **1.0 mm (N=40)** | | | | | | | | | | |
|---|---|---|---|---|---|---|---|---|---|---|
| Drips (total #) | | 61 | 0 | 0 | 4 | 0 | 0 | 0 | 0 | 0 |
| | Flaming (total #) | 56 | 0 | 0 | 1 | 0 | 0 | 0 | 0 | 0 |
| FOT > 10s (total #) | | 20 | 1 | 0 | 2 | 0 | 0 | 0 | 0 | 0 |
| Average FOT (s) | | 7.4 | 3.3 | 1.8 | 4.1 | 1.2 | 1.7 | 4.2 | 1.9 | 1.9 |
| SD FOT | 5.3 | 2.3 | 1.2 | 2.4 | 1.0 | 0.9 | 2.2 | 1.3 | 1.4 | |
| Max FOT (s) | 24 | 13 | 7 | 11 | 4 | 5 | 10 | 6 | 5 | |
| 40 Bar UL94 Rating | V2 | V1 | V0 | V2 | V0 | V0 | V0 | V0 | V0 | |

**Table 4C - Mechanical Properties of Table 4A Compositions**

| **Properties** | | **C3.1** | **C3.2** | **C3.3** | **C3.4** | **Ex3.1** | **Ex3.2** | **C3.5** | **Ex3.3** | **Ex3.4** |
|---|---|---|---|---|---|---|---|---|---|---|
| | | | | | | | | | | |

| **Physical** | | | | | | | | | | |
|---|---|---|---|---|---|---|---|---|---|---|
| Ash | % | X | X | X | 15.5 | 16.0 | 16.5 | 30.4 | 30.8 | 31.3 |
| Density | g/cc | 1.20 | 1.20 | 1.19 | 1.31 | 1.30 | 1.30 | 1.43 | 1.42 | 1.42 |
| Specific Gravity | - | 1.21 | 1.20 | 1.20 | 1.31 | 1.31 | 1.30 | 1.44 | 1.42 | 1.42 |
| | | | | | | | | | | |

| **Rheology** | | | | | | | | | | |
|---|---|---|---|---|---|---|---|---|---|---|
| MVR (300 °C, 1.2 kg) | cm³/10 min | 15.9 | 14.9 | 20.0 | 13.9 | 12.1 | 9.8 | 10.3 | 8.7 | 7.5 |
| Calc viscosity, 100 1/s, 300 °C | Pa·s | 321 | 275 | 257 | 333 | 337 | 393 | 371 | 454 | 452 |
| Calc viscosity, 1500 1/s, 300 °C | Pa·s | 192 | 185 | 137 | 150 | 153 | 163 | 162 | 166 | 170 |
| Calc viscosity, 3000 1/s, 300 C | Pa·s | 143 | 137 | 103 | 113 | 114 | 116 | 121 | 117 | 117 |
| Calc viscosity, 5000 1/s, 300 C | Pa·s | 111 | 103 | 80 | 93 | 89 | 90 | 92 | 92 | 91 |
| | | | | | | | | | | |

| **Heat** | | | | | | | | | | |
|---|---|---|---|---|---|---|---|---|---|---|
| HDT (0.45 MPa, 3.2 mm) | °C | 121 | 120 | 117 | 123 | 123 | 122 | 121 | 121 | 119 |
| | | | | | | | | | | |

| **Ductility** | | | | | | | | | | |
|---|---|---|---|---|---|---|---|---|---|---|
| NII Ductility (23 °C, 2.75 J) | % | 0 | 100 | 100 | 0 | 100 | 100 | 0 | 40 | 100 |
| NII Strength (23 °C, 2.75 J) | J/m | 93.1 | 820 | 786 | 72.5 | 193 | 200 | 142 | 211 | 231 |
| NII Ductility (-20 °C, 2.75 J) | % | 0 | 0 | 100 | 0 | 20 | 100 | 0 | 0 | 0 |
| NII Strength (-20 °C, 2.75 J) | J/m | 87.5 | 143 | 685 | 65.2 | 112 | 188 | 128 | 179 | 205 |
| | | | | | | | | | | |

| **Tensile** | | | | | | | | | | |
|---|---|---|---|---|---|---|---|---|---|---|
| Modulus of Elasticity | MPa | 2578 | 2468 | 2354 | 5662 | 5524 | 5308 | 9594 | 9166 | 9316 |
| Stress at Yield | MPa | 64.3 | 60.5 | 57.3 | 100 | 100 | 91.9 | X | 129 | 130 |
| Stress at Break | MPa | 58.7 | 56.1 | 59 | 98.2 | 98.1 | 89.5 | 133 | 127 | 128 |
| Elongation at Yield | % | 6.4 | 6.2 | 5.9 | 3.3 | 3.2 | 3.2 | X | 2.6 | 2.6 |
| Elongation at Break | % | 100 | 100 | 110 | 3.7 | 3.5 | 3.7 | 2.5 | 2.7 | 2.7 |

From the data it is observed that each of example compositions Ex3.1-Ex3.4 included at least 5 wt% of a PC-Si copolymer (40 wt% siloxane) for a total siloxane content of at least 2 wt%. These compositions also included at least 15 wt% glass fiber. The sample bars of compositions Ex3.1-Ex3.4 had zero (0) total drips (40 bars x 2 flame applications each = 80 total flame applications) at 0.6 mm, 0.75 mm and 1.0 mm. Ex3.1-Ex3.4 had an average flame-out time of less than 3.4 at 0.6 mm, less than 3.8 at 0.75 mm and less than 3.3 at 1.0 mm. The comparative compositions could not satisfy this FR performance; C3.3 satisfied the average FOT performance of the example compositions, but had 26 total drips at 0.6 mm.

Additionally, each of example compositions Ex3.1-Ex3.4 had a UL94 flammability rating of V0 at a thickness of 0.6 mm, 0.75 mm, and 1.0 mm as evaluated on 40 test bars.

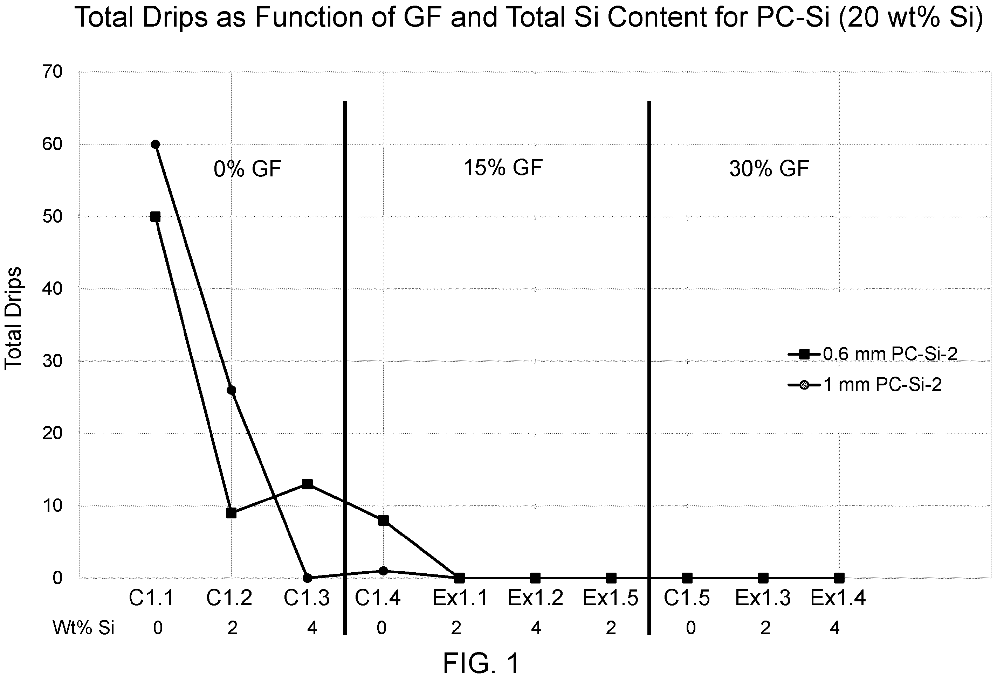

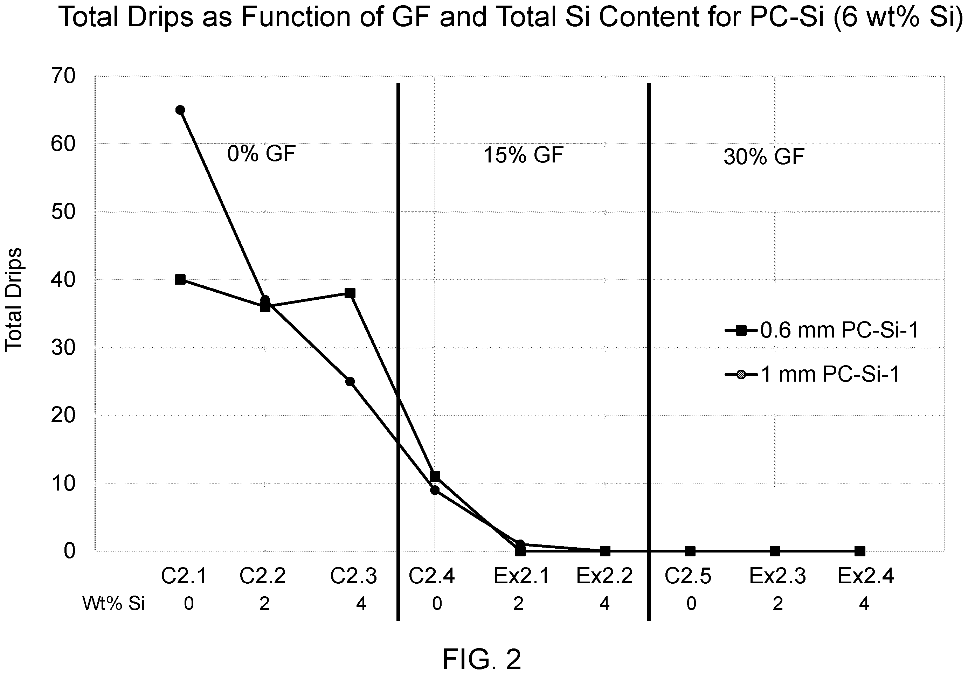

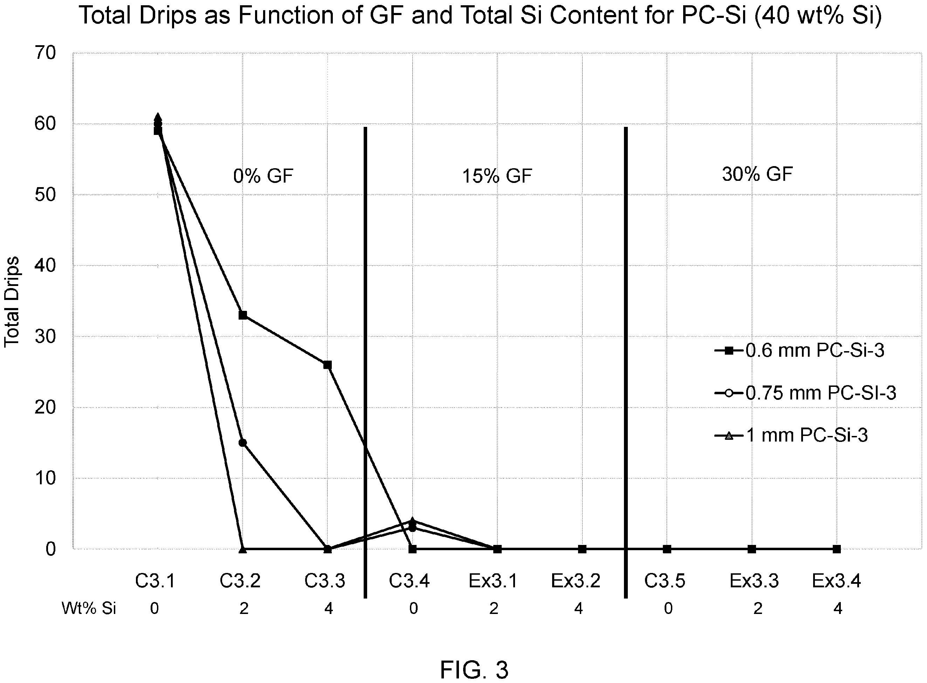

The drip performance of the compositions can be visualized as shown in FIGS. 1-3. Each figure represents the PC-Si data in Examples 1-3 above. FIG. 1 shows the PC-Si (20 wt%) data; FIG. 2 shows the PC-Si (6 wt%) data; FIG. 3 shows the PC-Si (40 wt%) data. Each graph shows the samples-in order-with 0 wt% glass fiber and 0, 2 or 4 wt% siloxane (first third of graph), 15 wt% glass fiber and 0, 2 or 4 wt% siloxane (middle third of graph) and 30 wt% glass fiber with 0, 2 or 4 wt% siloxane (last third of graph). From the figures it is seen that dripping is reduced when PC-Si copolymer content (total siloxane content) is increased in the compositions. For example PC compositions including 15 wt% glass fiber, no dripping is observed at a 2% siloxane loading of PC-Si (20 wt%) and PC-Si (40 wt%). A total siloxane content of greater than 2 wt% (i.e., 4 wt% as tested) was needed to completely suppress dripping in the PC-Si (6 wt%) samples. For the samples including 30 wt% glass fiber, dripping was not observed regardless of siloxane type or loading level.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 10 wt% to about 85 wt% of a polycarbonate component;
b) from about 2 wt% to about 70 wt% of at least one polycarbonate-siloxane copolymer having a siloxane content of from about 5 wt% to about 45 wt%;
c) from about 2 wt% to about 15 wt% of a phosphazene flame retardant; and
d) from about 10 wt% to about 50 wt% of an inorganic filler comprising glass fiber, carbon fiber, or a combination thereof,
wherein the composition is free of per-and polyfluoroalkyl substances (PFAS-free),
wherein the composition comprises at least 1.0 wt% total siloxane,
wherein 40 sample bars prepared according to UL94 having a thickness of from 0.6 millimeter (mm) to 1.0 mm exhibit 1 drip or less after two flame applications according to UL94, and
wherein the combined weight percent value of all components does not exceed 100 wt%, and all weight percent values are based on the total weight of the composition.

2. The thermoplastic composition according to claim 1, wherein the polycarbonate component comprises a polycarbonate homopolymer.

3. The thermoplastic composition according to claim 1 or 2, wherein the polycarbonate component comprises linear polycarbonate, branched polycarbonate, or a combination thereof.

4. The thermoplastic composition according to any one of claims 1 to 3, wherein the polycarbonate component comprises a low flow polycarbonate homopolymer, a high flow polycarbonate homopolymer, or a combination thereof.

5. The thermoplastic composition according to any one of claims 1 to 4, wherein the polycarbonate-siloxane copolymer has a siloxane content of from about 35 wt% to about 45 wt%.

6. The thermoplastic composition according to any one of claims 1 to 5, wherein the polycarbonate-siloxane copolymer has a siloxane content of from about 15 wt% to about 25 wt%.

7. The thermoplastic composition according to any one of claims 1 to 6, wherein the composition comprises at least two polycarbonate-siloxane copolymers, including a first polycarbonate-siloxane copolymer having a siloxane content of from about 35 wt% to about 45 wt% and a second polycarbonate-siloxane copolymer having a siloxane content of from about 5 wt% to about 25 wt%.

8. The thermoplastic composition according to any one of claims 1 to 7, wherein the inorganic filler comprises flat glass fiber.

9. The thermoplastic composition according to any one of claims 1 to 8, wherein the composition comprises from about 15 wt% to about 30 wt% of the inorganic filler.

10. The thermoplastic composition according to any one of claims 1 to 9, wherein the composition has a total siloxane content of from about 2 wt% to about 4 wt%.

11. The thermoplastic composition according to any one of claims 1 to 10, wherein the composition comprises at least one additional additive comprising an acid scavenger, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

12. The thermoplastic composition according to any one of claims 1 to 11, wherein the composition has a UL94 flammability rating of V0 or V1 at a thickness of 1.0 mm or less as evaluated on 40 test bars.

13. The thermoplastic composition according to any one of claims 1 to 11, wherein the composition has a UL94 flammability rating of V0 or V1 at a thickness of 0.6 mm as evaluated on 40 test bars.

14. The thermoplastic composition according to any one of claims 1 to 13, wherein the composition has a Notched Izod (NII) strength of 150 J/m or higher as evaluated at 23 °C using a 2.75 joule (J) impact energy according to ASTM D256.

15. An article comprising the thermoplastic composition according to any one of claims 1 to 14, wherein the article is a component of a consumer electronics application.
